# EUROPEAN PATENT APPLICATION

(11) **EP 2 009 342 A1**
(43) Date of publication of application: **31.12.2008**
(21) Application number: 08159054.9
(22) Date of filing: 19.06.2001
(51) Int. Cl.: F16N 19/00, F16N 37/00

(54) **Circulation lubrication system**

(30) Priority: 21.06.2000 FI 20001484
(62) Divisional of application: 01947493.1
(71) Applicant: Osakeyhtiö SKF Aktiebolag, 02601 Espoo (FI)
(72) Inventor: Airaksinen, Ari, 40950, Muurame (FI)
(74) Representative: Valkeiskangas, Tapio Lassi Paavali

(57) **Abstract**

A circulation lubrication system, including a pressure pipe line (3) configured to provide lubricant to at least one part to be lubricated and a return pipe line (5) configured to return lubricant from at least one part to be lubricated, an intermediate tank (1), the intermediate tank (1) being configured to condition the lubricant before recirculation, inlet channel means (5a) for feeding a lubricant into the intermediate tank (1), the inlet channel means (5a) being connected to the return pipe line (5), outlet channel means (3a) for removing the lubricant from the intermediate tank (1), the outlet channel means (3a) being connected to the pressure pipe line, discharge means (6) for emptying the intermediate tank, and measuring means (7, 8) arranged to start the discharge means (6) when the level of the lubricant in the intermediate tank (1) rises to a predetermined upper limit and to stop the discharge means (6) when the level of the lubricant in the intermediate tank (1) falls to a predetermined lower limit. The discharge means (6) comprise a pneumatic valve (9) arranged to open, controlled by the measuring means (7, 8), when the level of the lubricant is at the upper limit, and to let pressurized air flow into the intermediate tank (1). The pressurized air is arranged to push the lubricant out of the intermediate tank (1) through the outlet channel means (3a) to the pressure pipe line (3), and to shut and prevent the flow of pressurized air into the intermediate tank (1) when the level of the lubricant falls to the lower limit. A counter valve (10) is arranged in the inlet means (5a) for the lubricant before the intermediate tank (1), seen from the direction of flow, the counter valve (10) being arranged to prevent the flow of the lubricant out of the intermediate tank (1) through the inlet channel means (5a) to the return pipe line (5).

## Description

The invention relates to a circulation lubrication system, including a pressure pipe line configured to provide lubricant to at least one part to be lubricated and a return pipe line configured to return lubricant from at least one part to be lubricated, an intermediate tank, the intermediate tank being configured to condition the lubricant before recirculation, inlet channel means for feeding a lubricant into the intermediate tank, the inlet channel means being connected to the return pipe line, outlet channel means for removing the lubricant from the intermediate tank, the outlet channel means being connected to the pressure pipe line, discharge means for emptying the intermediate tank, and measuring means arranged to start the discharge means when the level of the lubricant in the intermediate tank rises to a predetermined upper limit and to stop the discharge means when the level of the lubricant in the intermediate tank falls to a predetermined lower limit.

Circulation lubrication systems are today used widely to lubricate various machines especially when the lubricant is used for cooling the parts to be lubricated. An example of the use of circulation lubrication is the lubrication of the bearings of the drying cylinders in paper machines or the lubrication of gas turbines. In both cases the bearings are subject to a thermal load from the outside. Circulation lubrication is also used when the part to be lubricated creates considerable dissipation power. One example of such applications is the lubrication of gear boxes. Still another use of circulation lubrication is in cases where the lubricant may get dirty in the part to be lubricated, and it should be possible to reuse the lubricant after cleaning. above arrangements are presently well-known in connection with circulation lubrication systems. As a typical example of the prior art circulation lubrication system EP patent 0 961 898 B1 can be mentioned.

A circulation lubrication system usually comprises at least one pump operated by an electric motors. The pump brings the oil into motion. The output of the pump is usually selected so that it exceeds the required flow rate by 10 to 20%, so that a sufficient operating margin is left for the control of bypass pressure. Oil is arranged to pass through replaceable filters. The filters are often arranged in two groups so that one group can be separated by means of valves and the filters can be changed without having to stop the entire assembly. An electric or steam-operated heater is often used for further heating of the oil. The oil is cooled by a heat exchanger having water or air cooling means. The cooling power is adjusted by a temperature regulator provided for supply oil. The set value of the temperature is often typically about 55 degrees Celsius. Pressure control is often effected by a bypass valve back to the oil tank. Depending on the system, the set values of the pressure controller typically vary between 5 and 20 bar.

Oil is supplied to parts needing lubrication such as different parts is a paper machine, by means of pressure trunk pipes usually made of rustproof material. The oil flows in the pipes as a laminar flow, and so that pressure drop is small. From the trunk pipes the oil is distributed to a plurality of flow metering boards wherefrom it is divided into rising pipes to be supplied to a number of parts to be lubricated. From these parts the oil is passed through return pipes by utilizing gravitation into collector pipes on the return side. The oil is passed under the influence of gravitation through the collector pipes into the intermediate tank of the circulation lubrication assembly. The pipes on the return side are never full of oil. The inclination of the pipes is about 2 to 3% towards the tank of the assembly. Before the tank the return oil is passed through a coarsemesh filter. The oil returned into the tank is then again sucked into circulation by the pump. The dimensions of the tank are usually such that the oil stays in the intermediate tank for a certain period of time depending on the viscosity of the oil. The conventional intermediate tank solutions are frequently implemented in such a way that two electric motor driven pumps, for example, are arranged in connection with the tank. The use of the pumps is controlled with starting and stopping liquid level switches. The pump starts when the level of the lubricant in the tank reaches the upper limit functioning as the starting level and stops when the level of the lubricant falls to the lower limit functioning as the stopping level. There are usually two pumps, whereby one of the pumps is in normal operation and the other is an emergency pump in case the pump in normal operation is affected by a failure and cannot empty the intermediate tank. The size of the intermediate tank is typically 100 to 600 litres.

In the system the lubricating oil tank, i.e. the intermediate tank has several functions for conditioning the oil before recirculation. One function of the tank is to allow air bubbles contained in the oil to rise to the surface. Air bubbles may increase the liability of the pump to cavitation, and they may deteriorate the lubricating film formed on the part needing lubrication. Another function is to allow large dirt particles with density considerably higher than that of oil to deposit on the bottom of the tank. To some extent water drops contained in the oil will also fall down in the tank. The density of water is so close to that of oil that the falling speed is slow. The tank condenses moist air flowing in the return pipes on the tank walls and drains the water along the walls, thus collecting it on the bottom of the tank. The tank also cools the oil through the walls. Furthermore, the tank forms a space into which the pipe lines are emptied at system shutdowns, and the tank serves as an oil storage in case of a pipe leakage, so that the machine to be lubricated can be shut down controllably. Still another function of the tank is to make sure that there is always oil in the pump suction means in order that air would not be sucked along. The moisture and suitable temperature also enable bacteria to grow in the tank.

Known circulation lubrication oil tanks have had similar basic solutions for decades. A tank is basically a rectangle, the capacity of which may typically vary from a few hundred litres up to 30 cubic metres. The size required depends on the operating principle of the tanks, according to which principle, to keep in good condition the oil must be allowed to rest in the tank about 30 minutes, so that impurities contained in the oil could be separated before the oil is recirculated. In addition to storing the oil, the tank must also cool the oil and be able to separate air, water and other impurities as stated above.

Drawbacks of the conventional intermediate tank solutions include the complexity, and also the size of the tank, which is relatively large. Due to the complexity, the manufacturing costs have been high, and the large size of the apparatus has made its positioning more difficult in industrial premises, which are in many cases rather limited in area.

An object of the invention is to provide an arrangement by means of which the drawbacks of the prior art can be eliminated. This has been achieved by means of the invention. The arrangement according to the invention is characterized in that the discharge means comprise a pneumatic valve arranged to open, controlled by the measuring means, when the level of the lubricant is at the upper limit, and to let pressurized air flow into the intermediate tank, whereby the pressurized air is arranged to push the lubricant out of the intermediate tank through the outlet channel means to the pressure pipe line, and to shut and prevent the flow of pressurized air into the intermediate tank when the level of the lubricant falls to the lower limit, and that a counter valve is arranged in the inlet means for the lubricant before the intermediate tank, seen from the direction of flow, the counter valve being arranged to prevent the flow of the lubricant out of the intermediate tank through the inlet channel means to the return pipe line.

An advantage of the invention compared with prior art solutions is, above all, that a construction smaller and simpler than previously can be achieved. For example the costs relating to rather expensive pumps can be eliminated, and also the space needed for pumps is not needed when the present invention is used. Thus, the manufacturing costs can be decreased by means of the invention, compared with the prior art, and the positioning of the apparatus in different industrial premises becomes considerably easier, compared with the use of conventional technology.

The invention will now be described in greater detail by means of a preferred embodiment of the invention, illustrated in the attached drawing, whereby

Figure 1 is a general view of a typical prior art circulation lubrication system for a paper machine;

Figure 2 shows shows a principle view of an arrangement according to the invention in a situation where the level of the lubricant in the intermediate tank is at the lower limit, and

Figure 3 shows a principle view of an arrangement according to the invention in a situation where the level of the lubricant in the intermediate tank is at the upper limit.

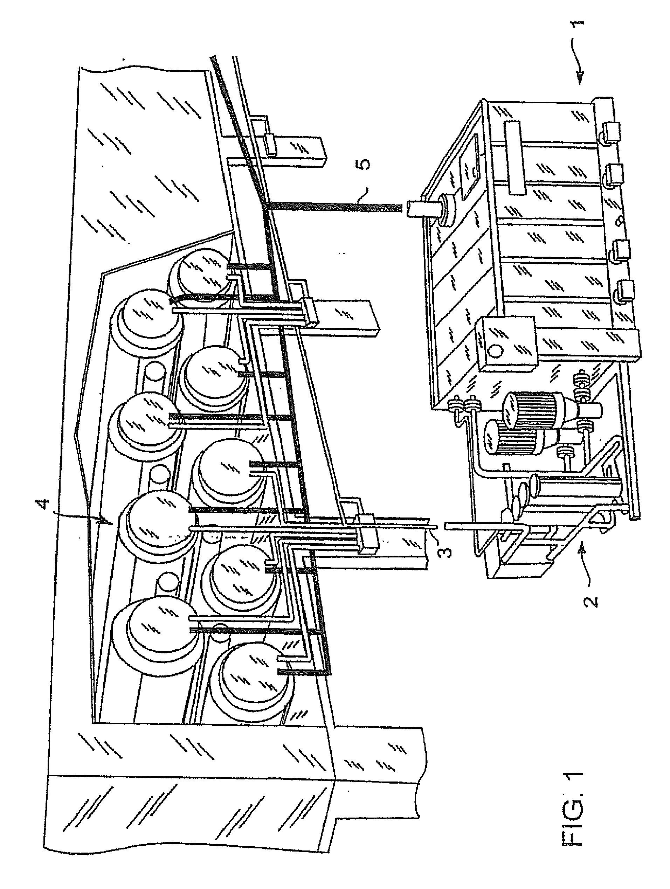

Figure 1 is a general view of a typical prior art circulation lubrication system for a paper machine. The reference numeral 1 indicates generally an oil tank, i.e. the intermediate tank of the system. The reference numeral 2 indicates generally an assembly comprising pumps, filters and other similar devices. The reference numeral 3 shows pressure pipe lines for supplying oil used as a lubricant to parts 4 to be lubricated, in this embodiment to drying cylinders in a paper machine. Further in Figure 1, the reference numeral 5 indicates return pipe lines for returning the oil from the parts to be lubricated to the oil tank 1. The structure and operation of the system shown in Figure 1 are obvious to a person skilled in the art, so these matters will not be described more closely herein. The functions of the intermediate oil tank 1 have been described above.

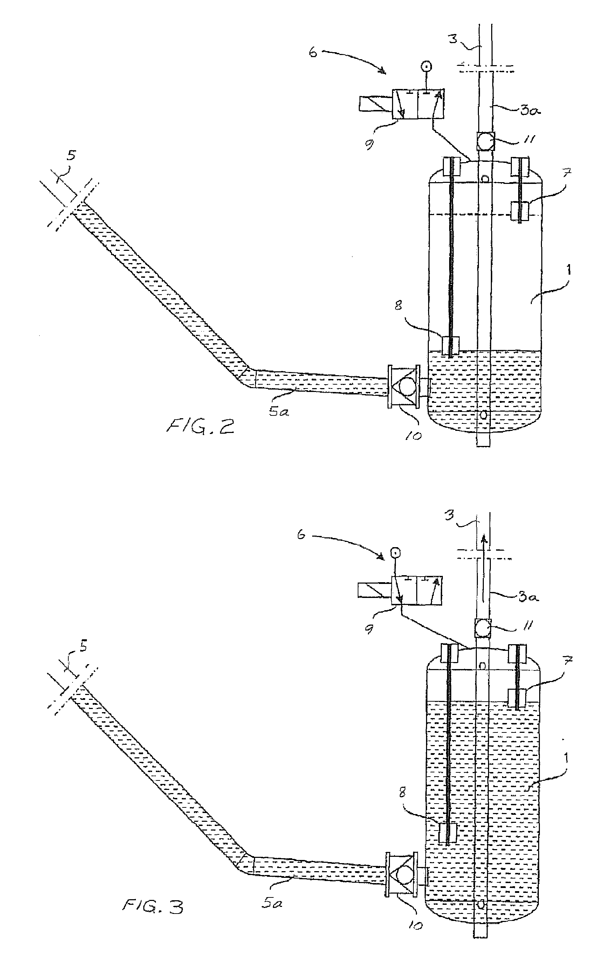

Figures 1 and 2 show a principle view of an arrangement according to the invention in situations where the level of the lubricant in the intermediate tank is at the lower limit and at the upper limit, respectively. The intermediate tank is denoted by reference numeral 1 in Figures 1 and 2. Inlet channel means for feeding a lubricant into the intermediate tank 1 are indicated by reference numeral 5a. The inlet channel means 5 are connected to the return pipe line 5. The inlet channel means 5a can be formed for instance of a tube which is connected to the intermediate tank 1 as illustrated in the figures the other end of the inlet channel means 5a is connected to the return pipe line 5. Outlet channel means for removing the lubricant from the intermediate tank 1 are denoted by reference numeral 3a in the figures. The outlet channel means 3a are connected to the pressure pipe line 3. The outlet channel means 3a can be formed of a tube in the way corresponding to what was presented in connection with the inlet channel means 5a. Discharge means for emptying the intermediate tank 1 are generally denoted by reference numeral 6 in the figure. Reference numerals 7 and 8 in the figures indicate measuring means which are arranged to start the discharge means 6 when the level of the lubricant in the intermediate tank 1 rises to the predetermined upper limit and to stop the discharge means 6 when the level of the lubricant in the intermediate tank 1 falls to the predetermined lower limit.

According to an essential idea of the invention, the discharge means 6 comprise a pneumatic valve 9. The pneumatic valve is connected to an appropriate source of pressurized air. Controlled by the measuring means 7, 8, the pneumatic valve 9 is arranged to open when the level of the lubricant is at the upper limit and to let pressurized air flow into the intermediate tank 1, whereby the pressurized air is arranged to push the lubricant out of the intermediate tank 1 through the outlet channel means 3a to the pressure pipe line 3, and correspondingly, to shut and prevent the flow of pressurized air into the intermediate tank 1 when the level of the lubricant falls to the lower limit. The pneumatic valve is at the shutting stage also arranged to open a gas flow channel from the inside space of the intermediate tank 1 to the surroundings, whereby the inside space of the tank can be vented freely. This flow channel can be created in connection with the pneumatic valve or it can be made a separate valve, the opening and shutting of which is controlled by the pneumatic valve. A counter valve 10 is arranged in the inlet channel means 5a for the lubricant, before the intermediate tank 1, seen from the direction of flow, the counter valve 10 being arranged to prevent the flow of the lubricant out of the intermediate tank 1 into the inlet channel means 5a and further to the return pipe line 5. The purpose of the counter valve 10 is thus to ensure that the pressurized air pushes the lubricant out of the intermediate tank specifically through the outlet channel means 3a.

Figure 1 shows in a principled manner a situation where the level of the lubricant in the intermediate tank 1 is at the lower level, whereby the pneumatic valve 9 shuts, opening a connection from the inside of the intermediate tank 1 to the surroundings. Figure 2, in turn, shows a situation where the level of the lubricant in the intermediate tank is at the upper limit, whereby the pneumatic valve 9 opens, letting pressurized air flow into the inside of the intermediate tank 1.

The outlet channel means 3a are further provided with a second counter valve 11, which is arranged to prevent the flow of the lubricant out of the outlet channel means back into the intermediate tank. The purpose of the second counter valve 11 is thus to ensure that the lubricant pushed by means of the pressurized air into the outlet channel means 3a does not flow back into the intermediate tank 1.

The arrangement according to the invention functions in the following way, in principle. The lubricant is conveyed into an intermediate tank 1 of a relatively small size through an inlet channel means 5a provided with a counter valve 10. Hence, the level of the lubricant begins to rise in the intermediate tank. The air in the intermediate tank 1 can flow to the surroundings through the flow channel of the pneumatic valve, At this stage, there is no connection from the source of pressurized air to the intermediate tank, in other words the pneumatic valve is closed. This situation is shown in Figure 1. When the level of the lubricant rises to the upper limit, the measuring means 7 gives a signal to the pneumatic valve, whereby the pneumatic valve opens and lets pressurized air flow into the inside of the intermediate tank 1, whereby the pressurized air simultaneously pushes the lubricant in the intermediate tank 1 out of the intermediate tank 1 through the outlet channels means. This situation is shown in Figure 2. When the lubricant flows out of the intermediate tank 1 as a result of the effect of the pressurized air, the level of the lubricant naturally falls in the intermediate tank, and as soon as the level falls to the lower limit, the measuring means 8 gives a signal to the pneumatic valve 9, whereby the pneumatic valve 9 shuts and the situation is again as in Figure 1, in other words the intermediate tank 1 begins to refill through the inlet channels means 2. The function of the counter valves 10 and 11 is to attend to the flow of the above-described kind.

The embodiments presented above are by no means intended to restrict the invention, but the invention can be varied totally freely within the scope of the claims. Thus, it is obvious that neither the arrangement according to the invention nor its details have to be of exactly the same type as what is shown in the figures, but solutions of other kinds are also feasible.

## Claims

1. A circulation lubrication system, including a pressure pipe line (3) configured to provide lubricant to at least one part to be lubricated and a return pipe line (5) configured to return lubricant from at least one part to be lubricated, an intermediate tank (1), the intermediate tank (1) being configured to condition the lubricant before recirculation, inlet channel means (5a) for feeding a lubricant into the intermediate tank (1), the inlet channel means (5a) being connected to the return pipe line (5), outlet channel means (3a) for removing the lubricant from the intermediate tank (1), the outlet channel means (3a) being connected to the pressure pipe line (3), discharge means (6) for emptying the intermediate tank, and measuring means (7, 8) arranged to start the discharge means (6) when the level of the lubricant in the intermediate tank (1) rises to a predetermined upper limit and to stop the discharge means (6) when the level of the lubricant in the intermediate tank (1) falls to a predetermined lower limit, **characterized in that** the discharge means (6) comprise a pneumatic valve (9) arranged to open, controlled by the measuring means (7, 8), when the level of the lubricant is at the upper limit, and to let pressurized air flow into the intermediate tank (1), whereby the pressurized air is arranged to push the lubricant out of the intermediate tank (1) through the outlet channel means (3a) to the pressure pipe line (3), and to shut and prevent the flow of pressurized air into the intermediate tank (1) when the level of the lubricant falls to the lower limit, and that a counter valve (10) is arranged in the inlet means (5a) for the lubricant before the intermediate tank (1), seen from the direction of flow, the counter valve (10) being arranged to prevent the flow of the lubricant out of the intermediate tank (1) through the inlet channel means (5a) to the return pipe line (5).

2. A circulation lubrication system according to claim 1, **characterized by** the outlet channel means (3a) being further provided with a second counter valve (11), which is arranged to prevent the flow of the lubricant from the outlet channel means (3a) back into the intermediate tank (1).

3. A circulation lubrication system according to claim 1, **characterized in that** when shutting, the pneumatic valve (9) is also arranged to open a gas flow channel from the inside space of the intermediate tank (1) to the surroundings.
